# EUROPEAN PATENT SPECIFICATION

(11) **EP 1 431 535 B1**
(45) Date of publication and mention of the grant of the patent: **11.01.2006**
(21) Application number: 03292947.3
(22) Date of filing: 26.11.2003
(51) Int. Cl.: F01N 3/28, B01J 35/04, B01J 37/02

(54) **Exhaust-gas purifying apparatus**
Abgasreinigungsvorrichtung
Dispositif de purification de gaz d'échappement

(30) Priority: 19.12.2002 JP 2002368104
(43) Date of publication of application: 23.06.2004
(73) Proprietor: Cataler Corporation, Ogasa-gun, Shizuoka-ken, 437-1492 (JP)
(72) Inventor: Shirahata, Junya, Ogasa-gun Shizuoka-ken 437-1492 (JP); Sato, Masayasu, Ogasa-gun Shizuoka-ken 437-1492 (JP); Kato, Yasuo, Ogasa-gun Shizuoka-ken 437-1492 (JP)
(74) Representative: Derambure, Christian

(56) References cited:
- US-A- 3 907 708
- US-A- 5 618 501
- US-A- 5 729 902

## Description

### BACKGROUND OF THE INVENTION

### Field of the Invention

The present invention relates to an exhaust-gas purifying apparatus.

### Description of the Related Art

In order to purify exhaust gases emitted from automobiles and motorcycles, exhaust-gas purifying apparatuses have been used. There are many types of exhaust-gas purifying apparatuses such as thermal reactor-system, lean burning-system, engine modification-system, and catalyst-system exhaust-gas purifying apparatuses. Among them, catalyst-system exhaust-gas purifying apparatuses have been used extensively.

Catalyst-system exhaust-gas purifying apparatuses purify exhaust gases by using catalytic precious metals such as Pt, Rh and Pd. In catalyst-system exhaust-gas purifying apparatuses, exhaust-gas purifying catalysts are used which are made in the following manner. A catalytic layer is formed on a surface of a catalyst support with activated alumina such as γ-alumina. Then, one or more catalytic precious metals are loaded on the catalytic layer.

As for the materials of catalyst supports, heat-resistant materials are used because catalyst supports are exposed to high-temperature exhaust gases. As such materials, it is possible to name ceramics, such as cordierite, heat-resistant metals, such as stainless steels.

Catalyst supports made of ceramics suffer from such disadvantages that they are susceptible to mechanical shocks and exhibit large emission resistance. Accordingly, catalyst supports made of metals have come to be used due to the reasons that the pressure loss of exhaust systems should be reduced or the heat resistance of catalyst supports should be improved.

An exhaust-gas purifying apparatus provided with a metallic catalyst support can be manufactured in the following manner, for example. A steel stock is rolled as a foil-shaped or sheet-shaped workpiece. The steel stock can be SUS304 (as per Japanese Industrial Standard (JIS), i.e., 18Cr-8Ni austenic stainless steel), or SUS430 (as per JIS, i.e., 16Cr ferritic stainless steel). The resulting foil-shaped or sheet-shaped workpiece is processed into a metallic catalyst support. Then, a catalytic layer is formed on a surface of the resultant metallic catalyst support. Finally, one or more catalytic precious metals are loaded on the catalytic layer. Thus, an exhaust-gas purifying apparatus provided with a metallic catalyst support is completed.

Depending on the shapes of catalyst supports, exhaust-gas purifying apparatuses can be divided into monolithic, granular, honeycomb-shaped and pipe-shaped exhaust-gas purifying apparatuses.

In honeycomb-shaped exhaust-gas purifying apparatuses, there is a problem in that metallic catalyst supports might be melted and damaged by misfires which are transmitted from internal combustion engines. Specifically, when metallic catalyst supports are melted, the effective loading amount of catalytic precious metals might be decreased, or honeycomb-shaped cells might be clogged to lower the exhaust-gas purifying ability of honeycomb-shaped exhaust-gas purifying apparatuses.

Moreover, in pipe-shaped exhaust-gas purifying apparatuses, the axial length should be prolonged in order to secure a desirable exhaust-gas purifying ability. Accordingly, the boardability problem might associate with pipe-shaped exhaust-gas purifying apparatuses. In addition, when the axial length of pipe-shaped exhaust-gas purifying apparatuses is prolonged, the exhaust-gas temperature might be dropped to lower the exhaust-gas purifying ability of pipe-shaped exhaust-gas purifying apparatuses.

Consequently, exhaust-gas purifying apparatuses have been developed in order to solve the problems. For example, such exhaust-gas purifying apparatuses are disclosed in Japanese Unexamined Patent Publication (KOKAI) No. 5-179,938, Japanese Unexamined Patent Publication (KOKAI) No. 7-269,331, Japanese Unexamined Patent Publication (KOKAI) No. 11-200,846, and Japanese Unexamined Patent Publication (KOKAI) No. 11-303,626.

Japanese Unexamined Patent Publication (KOKAI) No. 5-179, 938 discloses a catalyst in which a honeycomb-shaped catalytic tube is disposed so as to face the rear end of an exhaust pipe or a diffuser in a muffler.

Japanese Unexamined Patent Publication (KOKAI) No. 7-269,331 discloses a catalyst in which a catalytic layer is formed on the inner peripheral surface of an exhaust pipe.

Japanese Unexamined Patent Publication (KOKAI) No. 11-200,846 discloses a muffler in which a catalytic tube is disposed at the rear end of a diffuser.

Japanese Unexamined Patent Publication (KOKAI) No. 11-303,626 discloses a catalyst in which a metallic support is held in an exhaust pipe and is fixed by a portion of the exhaust pipe extending from the center to rear end of the same.

Thus, the four patent publications disclose catalysts in which a catalyst support is disposed at a position where the flame does not reach when misfires occur in order that the catalyst is inhibited from being melted and damaged by misfires.

However, when catalyst supports are disposed on a downstream side where they are not adversely affected by misfires as the catalysts disclosed in the four patent publications, the catalysts are not heated fully because the temperature of exhaust gases drops until exhaust gases contact with the catalysts. As a result, the catalysts disclosed in the four patent publications suffer from a problem in that they cannot show the exhaust-gas purifying ability.

### SUMMARY OF THE INVENTION

The present invention has been developed in view of the aforementioned circumstances. It is therefore an object of the present invention to provide an exhaust-gas purifying apparatus which is inhibited from being melted and damaged by misfires.

The inventors of the present invention studied the catalysts disclosed in the four patent publications thoroughly. As a result, they found out that it is possible to achieve the object by an exhaust-gas purifying apparatus having all features of claim 1.

In the present exhaust-gas purifying apparatus, the support is less likely to be melted and damaged by misfires because the support is fixed so as to be away from one of the opposite opening ends of the mantle by a predetermined distance. Moreover, in the present exhaust-gas purifying apparatus, the catalytic layer is loaded on the inner peripheral surface of the mantle as well. Accordingly, when exhaust gases pass through the inside of the mantle, the exhaust gases are purified upon contacting with the inner peripheral surface of the mantle. Consequently, not only the present exhaust-gas purifying apparatus is inhibited from being melted and damaged by misfires, but also is kept from exhibiting a degrading exhaust-gas purifying ability.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 is a drawing for illustrating a pipe-shaped exhaust-gas purifying apparatus according to Example No. 1 of the present invention;
Fig. 2 is a drawing for illustrating the arrangement of a pipe-shaped exhaust-gas purifying apparatus according to Example No. 4 of the present invention;
Fig. 3 is a drawing for illustrating the arrangement of a pipe-shaped exhaust-gas purifying apparatus according to Comparative Example;
Fig. 4 is an image for depicting a honeycomb structure of the pipe-shaped exhaust-gas purifying apparatus according to Example No. 1 after it was subjected to a misfire resistance test; and
Fig. 5 is an image for depicting a honeycomb structure of the pipe-shaped exhaust-gas purifying apparatus according to Comparative Example after it was subjected to a misfire resistance test.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

The present exhaust-gas purifying apparatus comprises a mantle, a support, and a catalytic layer. In the present exhaust-gas purifying apparatus, exhaust gases which pass inside the mantle are purified mainly by the support which is disposed in the mantle and whose surface is loaded with the catalytic layer.

The mantle demarcates an exhaust-gas flow passage, through which exhaust gases pass, therein. As for the mantle, it is possible to use mantles composed of heat-resistant metals which have been used in conventionally known pipe-shaped catalysts. Moreover, the cross-sectional shape of the mantle is not limited in particular.

The support is a component part which is disposed in the mantle.

In the present exhaust-gas purifying apparatus, the catalytic layer is loaded not only on the surface of the support but also on the inner peripheral surface of the mantle. The catalytic layer comprises a catalytic ingredient which purifies exhaust gases when it contacts with exhaust gases. It is possible to purify exhaust gases on the entire inner surface of the mantle as well because the catalytic layer is loaded on the inner peripheral surface of the mantle and the surface of the support. As for the catalytic layer, it is possible to use conventionally known catalytic layers.

In the present exhaust-gas purifying apparatus, the support is fixed so as to be away from one of the opposite opening ends of the mantle by a predetermined distance. In the present exhaust-gas purifying apparatus, note that the "one of the opposite opening ends of the mantle" designates one of the opposite ends of the mantle, one of the opposite opening ends which is disposed on an upstream side of the flow of exhaust gases when purifying exhaust gases with the present exhaust-gas purifying apparatus. Moreover, the "predetermined distance" between the support and the one of the opposite opening ends of the mantle designates a distance between the upstream-side opening end of the mantle and the upstream-side opposite opening end of the support. When the support is fixed so as to be away from one of the opposite opening ends of the mantle by a predetermined distance, the support is not melted and damaged even if misfires occur in exhaust gases in purifying exhaust gases with the present exhaust-purifying apparatus.

The support can preferably be fixed in the mantle so as to position one of the opposite opening ends away from the one of the opposite opening ends of the mantle by a distance of 50 mm or more. When the support is fixed in the mantle so as to position one of the opposite end surfaces (i.e., the upstream-side opposite opening surface) away from the one of the opposite end surfaces (i.e., the upstream-side opposite opening surface) of the mantle by a distance of 50 mm or more, it is possible to more reliably effect the advantage that the support is not melted and damaged. The support can desirably be fixed in the mantle so as to position the upstream-side opposite end surface away from the upstream-side opposite end surface of the mantle by a distance of from 50 to 200 mm, further from 80 to 150 mm.

The support can preferably be made of a metal. When the support is composed of metals, it is possible to produce the support with a variety of forms. Moreover, it is possible to form the support having a great number of cells because metallic supports can be processed to a thin thickness. In addition, metallic supports can raise the temperature to an activation temperature of catalysts quickly because metals are good in terms of the thermal conductivity.

Further, when the support is composed of metals, it can be fixed to metallic mantles with ease. Specifically, metallic supports can be easily fixed to metallic mantles by welding or brazing.

Furthermore, the support can desirably be formed of ferrous metallic foils or ferrous metallic sheets. The ferrous metals composing metallic foils or metallic sheets herein designate metals whose major component is iron. Note that the ferrous metals exhibit satisfactory characteristics when they are used as the support. As for the metals whose major component is iron, it is possible to name general steel workpieces, such as cold rolled steel plates composed of SPCC (as per JIS), in addition to stainless steels, such as SUS403 and SUS436 (as per JIS) which have been used in conventional metallic supports.

Moreover, the shape of the support is not limited in particular, and can be determined appropriately depending on specific applications. For example, it is possible to use honeycomb structures in which a flat plate and a corrugated plate comprising a metallic sheet or a metallic foil are laminated alternately, or honeycomb structures in which a flat plate and a corrugated plate are laminated and wound as a roll shape. In this instance, when a honeycomb structure is fixed to the mantle, it is possible to securely give the present exhaust-gas purifying apparatus satisfactory mechanical strength. Moreover, the mantle can be formed of metallic sheets whose composition is identical with that of honeycomb structures. In addition, when a honeycomb structure is accommodated into the mantle, the mantle can be integrated with the honeycomb structure by known methods. Note that, in all of the specific modes, the thickness of a metallic sheet or a metallic foil can be determined appropriately depending on specific applications. Moreover, the support can preferably be honeycomb structures, because honeycomb structures can provide the present exhaust-gas purifying apparatus with a wider superficial area.

In addition, as the other shape of the support, it is possible to exemplify pipes which are formed of a metallic sheet or a metallic foil. Furthermore, it is possible to name pipe shapes which are further provided with a cross-shaped or corrugated extra support plate for demarcating the pipe-shaped inner space.

The present exhaust-gas purifying apparatus can preferably further comprise a protective film exhibiting oxidation resistance and formed on the inner peripheral surface of mantle and the surface of the supports. When a protective film exhibiting oxidation resistance is formed on the inner peripheral surface of the mantle and the surface of the support, the mantle and support do not contact directly with the catalytic ingredient loaded on the catalytic layer, and accordingly are not corroded by the action of the catalytic ingredient. Moreover, the arrangement effects another advantage that less expensive ordinary steels can be used for the mantle and support. Specifically, the mantle and support are not required especially to exhibit characteristics such as oxidation resistance, because the protective film inhibits the catalytic action of the catalytic ingredient. The protective film formed on the inner peripheral surface of the mantle and the surface of the support is not limited in particular as far as it gives oxidation resistance to the mantle and support. For example, it is possible to use conventionally known oxidation-resistant films. As for the protective film exhibiting oxidation resistance, it is possible to name films whose major component is nickel or chromium.

The mantle can be formed as either linear or curved shapes with respect to the axis. For example, the mantle can be curved from the one of the opposite opening ends to the portion at which the support is disposed.

The mantle can preferably be an exhaust pipe. When the mantle is an exhaust pipe, it is possible to purify exhaust gases by simply passing exhaust gases through the inside of the mantle.

In the present exhaust-gas purifying apparatus, it is possible to use conventionally known catalytic layers as the catalytic layer. The catalytic layer can preferably comprise a loading layer, and a catalytic ingredient loaded on the loading layer.

The loading layer is used in order to enlarge the contacting area of the present exhaust-gas purifying apparatus with respect to exhaust gases. It is possible to use heat-resistant inorganic oxides which have been used in ordinary exhaust-gas purifying apparatuses. The loading layer can preferably comprise heat-resistant inorganic oxides whose major component is activated alumina. Moreover, the loading layer can preferably further comprise additional oxides such as ceria and zirconia. When the loading layer comprises such additional oxides, it is possible to upgrade the exhaust-gas purifying ability of the present exhaust-gas purifying apparatus. In addition, the thickness of the loading layer is not limited in particular, but can be determined appropriately depending on specific applications.

The catalytic ingredient is loaded on the loading layer. The catalytic ingredient can be loaded on the loading layer after the loading layer is formed. Alternatively, the catalytic ingredient can be loaded on the loading layer by mixing it in a slurry such as activated alumina and coating the resulting mixture on metallic supports. The catalytic ingredient of the present exhaust-gas purifying apparatus is a component which purifies exhaust gases. As for the catalytic ingredient, it is possible to use catalytic ingredients which have been used in ordinary exhaust-gas purifying apparatuses. For example, it is possible to use all of oxidizing catalysts, reducing catalysts and 3-way catalysts as the catalytic ingredient.

Specifically, when at least one member selected from the group consisting of platinum (Pt), palladium (Pd) and rhodium (Rh) is used for the catalytic ingredient, it is possible to purify carbon monoxide (CO), hydrocarbons (HC) and nitrogen oxides (NOₓ) which are contained in exhaust gases efficiently. Moreover, the loading amount of the catalytic ingredient is not limited in particular, but can be determined appropriately depending on specific applications.

### Examples

Hereinafter, the present invention will be described in more detail with reference to specific examples.

As examples of the present invention, the following pipe-shaped exhaust-gas purifying apparatuses were manufactured as described below.

### (Example No. 1)

First of all, a pipe was prepared which was composed of SUS304 as per JIS. The pipe had a thickness of 1.2 mm, an inside diameter of 31.8 mm, an outside diameter of 34.2 mm, and an axial length of 100 mm.

Subsequently, a honeycomb structure was prepared which was composed of SUS 304 as per JIS. The honeycomb structure comprised a wall-flow gas distribution cells in an amount of 16 cells/cm² (or 100 cells/inch² approximately), and had a diameter of 33.0 mm and an axial length of 20 mm.

Then, the honeycomb structure was fitted into the pipe through the rear opposite opening of the pipe. Note that the honeycomb structure was fitted into the pipe until the rear-end opposite surface of the honeycomb structure was flush with the rear-end opposite surface of the pipe.

Thereafter, while keeping the pipe and honeycomb structure in the temporarily fixed manner, a brazing alloy was applied onto the inner peripheral surface of the pipe into which the honeycomb structure was fitted and onto the surface of the honeycomb structure in a thickness of from 10 to 100 µm. The pipe and honeycomb structure with the brazing alloy applied was held at 1,200 °C in a vacuum atmosphere for 1 hour. A protective film was formed on the inner peripheral surface of the pipe and on the surface of the honeycomb structure by thus heating the pipe and honeycomb structure. When the protective film was formed, the pipe and the honeycomb structure were fixed by brazing. Note that the used brazing alloy comprised Cr in an amount of 18% by weight, Si in an amount of 10% by weight, and the balance of Ni and inevitable impurities. The brazing alloy can desirably comprise Cr in an amount of from 10 to 30% by weight, Si in an amount of from 5 to 20% by weight, and the balance of Ni and inevitable impurities. Moreover, the protective film can desirably be formed in a thickness of from 5 to 50 µm, further from 10 to 30 µm on the inner peripheral surface of the pipe and the surface of the honeycomb structure.

In the meantime, a slurry was prepared by uniformly mixing activated alumina, a Ce-Zr composite oxide, a binder, Pt, Rh and water. The activated alumina was γ-Al₂O₃, and was used in an amount of 57.6 parts by weight. The Ce-Zr composite oxide was used in an amount of 32.4 parts by weight. Note that the amount of the Ce-Zr composite oxide could be 27.5 parts by weight by conversion into CeO₂. The binder was used in an amount of 5.8 parts by weight. Pt was used in an amount of 5.8 parts by weight. Rh was used in an amount of 0.7 parts by weight. The water was used in an amount of 250 parts by weight.

The resultant slurry was coated on the inner peripheral surface of the pipe and the surface of the honeycomb structure. Note that the coating amount was 36 g/m ². Thereafter, the coated slurry was calcined at 500 °C for 1 hour.

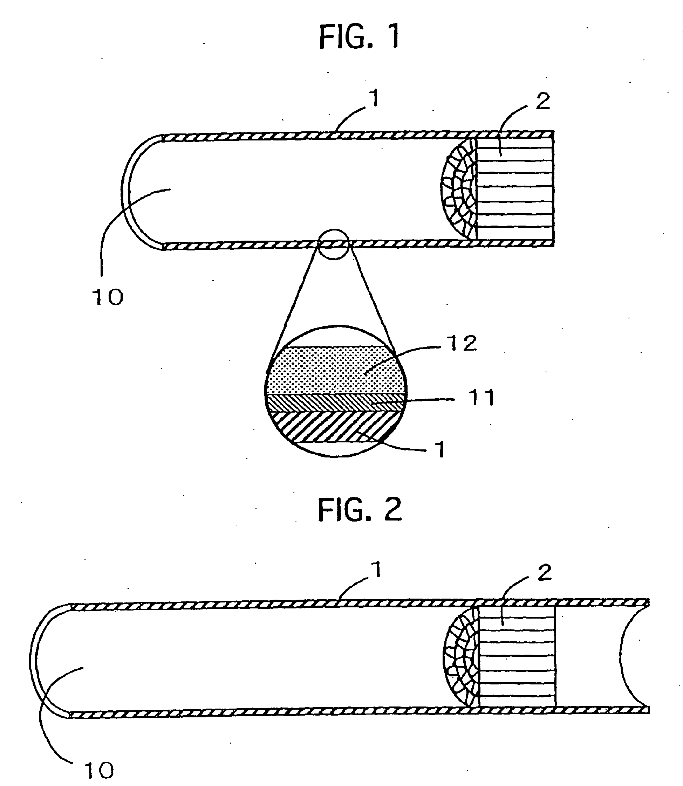

In accordance with the above-described procedures, a pipe-shaped exhaust-gas purifying apparatus according to Example No. 1 was manufactured. Fig. 1 illustrates the arrangement of the pipe-shaped exhaust-gas purifying apparatus according to Example No. 1. Note that Fig. 1 is a cross-sectional view taken along a plane which involves the central axis of the pipe-shaped exhaust-gas purifying apparatus according to Example No. 1.

As illustrated in Fig. 1, the pipe-shaped exhaust-gas purifying apparatus according to Example No. 1 comprised a mantle 1, a honeycomb structure 2, a protective film 11, and a catalytic layer 12. The honeycomb structure 2 was fixed at the rear opposite opening end of the mantle 1 so as to position the front-end opposite surface of the honeycomb structure 2 away from the front-end opposite surface 10 of the mantle 1 by a distance of 80 mm. Moreover, the protective film 11 was formed on the exposed inner peripheral surface of the mantle 1 entirely. In addition, the catalytic layer 12 was loaded on the protective film 11.

### (Example No. 2)

First of all, a pipe was prepared which was composed of SUS304 as per JIS. The pipe had a thickness of 1 mm, an inside diameter of 25 mm, an outside diameter of 27 mm, and an axial length of 200 mm.

Subsequently, a honeycomb structure was prepared which was composed of SUS 304 as per JIS. The honeycomb structure comprised a wall-flow gas distribution cells in an amount of 32 cells/cm² (or 200 cells/inch² approximately), and had a diameter of 25 mm and an axial length of 20 mm.

Then, the honeycomb structure was fitted into the pipe through the rear opposite opening of the pipe. Note that the honeycomb structure was fitted into the pipe until the rear-end opposite surface of the honeycomb structure was flush with the rear-end opposite surface of the pipe.

Thereafter, a protective film was formed in the same manner as Example No. 1, and a catalytic layer was loaded on the resulting protective film in the same manner as Example No. 1.

In accordance with the above-described procedures, a pipe-shaped exhaust-gas purifying apparatus according to Example No. 2 was manufactured.

In the pipe-shaped exhaust-gas purifying apparatus according to Example No. 2, the honeycomb structure whose axial length was 20 mm was fixed at the rear opening end of the pipe whose axial length was 200 mm. Note that the honeycomb structure was fixed at the rear opening end of the pipe so as to position the front-end opposite surface of the honeycomb structure away from the front-end opposite surface of the pipe by a distance of 180 mm. Moreover, the protective film was formed on the exposed inner peripheral surface of the pipe entirely. In addition, the catalytic layer was loaded on the protective film.

### (Example No. 3)

Except that a honeycomb structure comprising cells in an amount of 1.4 cells/cm² (or 40 cells/inch² approximately) and having an axial length of 50 mm was used, a pipe-shaped exhaust-gas purifying apparatus according to Example No. 3 was manufactured in the same manner as the pipe-shaped exhaust-gas purifying apparatus according to Example No. 2.

In the pipe-shaped exhaust-gas purifying apparatus according to Example No. 3, the honeycomb structure whose axial length was 50 mm was fixed at the rear opening end of the pipe whose axial length was 200 mm. Note that the honeycomb structure was fixed at the rear opening end of the pipe so as to position the front-end opposite surface of the honeycomb structure away from the front-end opposite surface of the pipe by a distance of 150 mm. Moreover, the protective film was formed on the exposed inner peripheral surface of the pipe entirely. In addition, the catalytic layer was loaded on the protective film.

### (Example No. 4)

First of all, a pipe was prepared which was composed of SUS304 as per JIS. The pipe had a thickness of 1 mm, an inside diameter of 25 mm, an outside diameter of 27 mm, and an axial length of 200 mm.

Subsequently, a honeycomb structure was prepared which was composed of SUS 304 as per JIS. The honeycomb structure comprised a wall-flow gas distribution cells in an amount of 16 cells/cm² (or 100 cells/inch² approximately), and had a diameter of 25 mm and an axial length of 30 mm.

Then, the honeycomb structure was fitted into the pipe through the rear opposite opening of the pipe. Note that the honeycomb structure was fitted into the pipe until the rear-end opposite surface of the honeycomb structure was positioned away from the rear-end opposite surface of the pipe by a distance of 30 mm.

Thereafter, a protective film was formed in the same manner as Example No. 1, and a catalytic layer was loaded on the resulting protective film in the same manner as Example No. 1.

In accordance with the above-described procedures, a pipe-shaped exhaust-gas purifying apparatus according to Example No. 4 was manufactured. Fig. 2 illustrates the arrangement of the pipe-shaped exhaust-gas purifying apparatus according to Example No. 4.

As illustrated in Fig. 2, the pipe-shaped exhaust-gas purifying apparatus according to Example No. 4 comprised a mantle 1, a honeycomb structure 2, a protective film, and a catalytic layer. The honeycomb structure 2 having an axial length of 30 mm was fitted into the mantle 1 having an axial length of 200 mm. Note that the honeycomb structure 2 was fixed in the mantle 1 so as to position the rear-end opposite surface of the honeycomb structure 2 away from the rear-end opposite surface of the mantle 1 by a distance of 30 mm or to position the front-end opposite surface of the honeycomb structure 2 away from the front-end opposite surface of the mantle 1 by a distance of 140 mm. Moreover, the protective film was formed on the exposed inner peripheral surface of the mantle 1 entirely. In addition, the catalytic layer was loaded on the protective film.

### (Comparative Example)

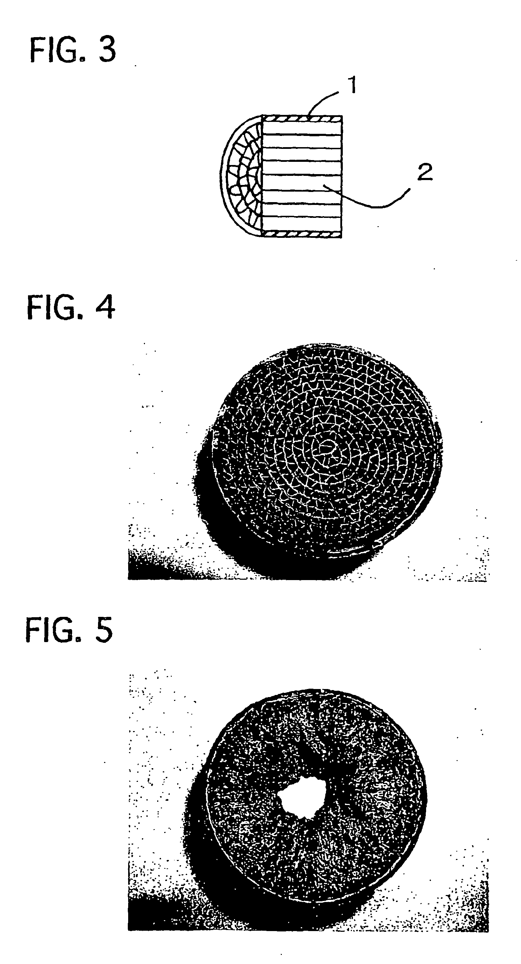

Except that a pipe was cut to an axial length of 20 mm, a pipe-shaped exhaust-gas purifying apparatus according to Comparative Example was manufactured in the same manner as the pipe-shaped exhaust-gas purifying apparatus according to Example No. 1. Fig. 3 illustrates the arrangement of the pipe-shaped exhaust-gas purifying apparatus according to Comparative Example.

As illustrated in Fig. 3, the pipe-shaped exhaust-gas purifying apparatus according to Comparative Example comprised a mantle 1, a honeycomb structure 2, a protective film, and a catalytic layer. Note that the honeycomb structure 2 whose axial length was 20 mm occupied the inside of the mantle 1 whose axial length was 20 mm completely. Moreover, the catalytic layer was loaded only on the surface of the honeycomb structure 2 on which the protective film was formed.

### (Assessment)

In order to assess the misfire resistance of the pipe-shaped honeycomb-shaped exhaust-gas purifying apparatuses according to Example Nos. 1 through 4 and Comparative Example, the respective pipe-shaped exhaust-gas purifying apparatuses were subjected to a misfire resistance test.

The misfire resistance test was carried out as hereinafter described. The respective pipe-shaped exhaust-gas purifying apparatuses were installed to an exhaust system of a motorbike on which a 4-stroke engine was boarded. The engine had a displacement of 0.400 L (or 400 cc). The engine was driven under a constant-speed condition, i.e., at a speed of 100 km/h (or at the 4th speed, or at 3,600 rpm), and was thereafter stopped by braking it. Thus, a misfire occurred. Then, the respective pipe-shaped exhaust-gas purifying apparatuses were examined whether the honeycomb structure was melted and damage. Note that the mantle of the respective pipe-shaped exhaust-gas purifying apparatuses was cut at the portion corresponded to the front-end opposite surface of the honeycomb structure in order to examine the front-end opposite surface of the honeycomb structure visually.

Moreover, the respective pipe-shaped exhaust-gas purifying apparatuses according to Example Nos. 1 through 4 and Comparative Example were subjected to a later-described durability test. Thereafter, the respective pipe-shaped exhaust-gas purifying apparatuses according to Example Nos. 1 through 4 and Comparative Example were examined for the misfire resistance in the same manner as described above.

Note that the durability test to which the pipe-shaped exhaust-gas purifying apparatuses were subjected was carried out in the following manner. The pipe-shaped exhaust-gas purifying apparatuses were subjected to a heat treatment in which they were held at 900 °C for 25 hours in an alternating rich-lean atmosphere into which CO and O₂ were added at intervals of 1 minutes alternately at a flow rate of 200 and 100 mL/min., respectively, while feeding N₂ and H₂O at a fixed flow rate of 8.5 and 1 mL/min., respectively. Moreover, the heat treatment was carried out with a tubular electric furnace.

Table 1 below summarizes the results of the assessment on the misfire resistance of the pipe-shaped exhaust-gas purifying apparatuses according to Example Nos. 1 through 4 and Comparative Example when they were new (or before they were not subjected to the durability test) and after they were subjected to the durability test. Note that, in Table 1, "Good" specifies that it was observed that the honeycomb structure was not melted and damaged, and "Poor" specifies that it was observed that the honeycomb structure was melted and damaged.

**TABLE 1**

| | Before Durability Test | After Durability Test |
|---|---|---|
| Ex. No. 1 | Good | Good |
| Ex. No. 2 | Good | Good |
| Ex. No. 3 | Good | Good |
| Ex. No. 4 | Good | Good |
| Comp. Ex. | Poor | Poor |

As set forth in Table 1, not only when the pipe-shaped exhaust-gas purifying apparatuses according to Example Nos. 1 through 4 were new but also after they were subjected to the durability test, it was confirmed that their honeycomb structure was not melted and damaged after they were subjected to the misfire resistance test. For example, Fig. 4 shows the appearance of the honeycomb structure in the pipe-shaped exhaust-gas purifying apparatus according to Example No. 1 before the durability test but after the misfire resistance test. As shown in Fig. 4, it was observed that the respective cellular walls demarcating the cells of the honeycomb structure were not melted and damaged even when misfire occurred.

On the other hand, not only when the pipe-shaped exhaust-gas purifying apparatus according to Comparative Example was new but also after it was subjected to the durability test, it was confirmed that the honeycomb structure was melted and damaged after it was subjected to the misfire resistance test. For example, Fig. 5 shows the appearance of the honeycomb structure in the pipe-shaped exhaust-gas purifying apparatus according to Comparative Example before the durability test but after the misfire resistance test. As shown in Fig. 5, it was observed that the honeycomb structure was melted and damaged by misfire to make a huge hollow which penetrated in the axial direction. When such a melt damage occurs, the exhaust-gas purifying ability of pipe-shaped exhaust-gas purifying apparatuses has been degraded sharply.

Thus, in the pipe-shaped exhaust-gas purifying apparatuses according to Example Nos. 1 through 4 whose catalytic layer was loaded on the protective layer formed on the inner peripheral surface of the pipe and the surface of the honeycomb structure, and whose honeycomb structure was fixed so as to be away from the upstream-side opposite surface of the pipe by a predetermined distance, the honeycomb structure was not melted and damaged so that the exhaust-gas purifying ability was inhibited from degrading. Hence, the pipe-shaped exhaust-gas purifying apparatuses according to Example Nos. 1 through 4 were good in terms of the misfire resistance.

Having now fully described the present invention, it will be apparent to one of ordinary skill in the art that many changes and modifications can be made thereto without departing from the scope of the present invention as claimed.

## Claims

1. An exhaust-gas purifying apparatus, comprising :
a mantle (1);
a support (2) disposed in the mantle (1); and
a catalytic layer (12);
the catalytic layer (12) being loaded on the inner peripheral surface of the mantle (1) and the surface of the support (2); and
the support (2) being fixed so as to be away from one of the opposite opening ends (10) of the mantle (1) by a predetermined distance,
Wherein the support (2) is fixed in the mantle (1) so as to position one of the opposite end surfaces away from the one of the opposite opening ends of the mantle by a distance of 50 mm or more.

2. The exhaust-gas purifying apparatus set forth in claim 1, wherein the support (2) is made of a metal.

3. The exhaust-gas purifying apparatus set forth in claim 1, wherein the support comprises a honeycomb structure (2).

4. The exhaust-gas purifying apparatus set forth in claim 1 further comprising a protective film (11) exhibiting oxidation resistance and formed on the inner peripheral surface of the mantle (1) and the surface of the support (2).

5. The exhaust-gas purifying set forth in claim 4, wherein the catalytic layer (12) is loaded on the protective film (11).

6. The exhaust-gas purifying apparatus set forth in claim 1, wherein the mantle (1) is an exhaust pipe.

## Patentansprüche

1. Abgase reinigendes Gerät mit
einer Überform (1);
einem in der Überform (1) angebrachten Träger (2) ; und
einer katalytischen Schicht (12);
wobei die katalytische Schicht (12) auf der inneren peripherischen Fläche der Überform (1) und der Fläche des Trägers (2) geladen ist; und
wobei der Träger (2) befestigt ist, so dass er durch eine vorbestimmte Entfernung von einem der gegenüberliegenden Enden (10) der Überform (1) entfernt ist,
in dem der Träger (2) in der Überform (1) befestigt ist, so dass eine der Flächen des gegenüberliegenden Endes um eine Entfernung von 50 mm oder mehr entfernt von dem einen der gegenüberliegenden Enden der Überform positioniert wird.

2. Abgase reinigendes Gerät gemäß Anspruch 1, in dem der Träger (2) aus Metall ist.

3. Abgase reinigendes Gerät gemäß Anspruch 1, in dem der Träger eine wabenförmige Struktur (2) umfasst.

4. Abgase reinigendes Gerät gemäß Anspruch 1, das darüber hinaus einen eine Oxidationswiderstandsfähigkeit aufweisenden und auf der inneren peripherischen Fläche der Überform (1) und der Fläche des Trägers (2) gebildeten Schutzfilm (11) umfasst.

5. Abgase reinigendes Gerät gemäß Anspruch 4, in dem die katalytische Schicht (12) auf den Schutzfilm (11) geladen wird.

6. Abgase reinigendes Gerät gemäß Anspruch 1, in dem die Überform (1) ein Ausströmungsrohr ist.

## Revendications

1. Appareil de purification de gaz d'échappement, comprenant :
une enveloppe extérieure (1) ;
un support (2) disposé dans l'enveloppe extérieure (1) ; et
une couche catalytique (12) ;
la couche catalytique (12) étant chargée sur la surface périphérique interne de l'enveloppe extérieure (1) et la surface du support (2) ; et
le support (2) étant fixé de façon à être éloigné de l'une des extrémités d'ouverture opposées (10) de l'enveloppe extérieure (1) d'une distance prédéterminée,
dans lequel le support (2) est fixé dans l'enveloppe extérieure (1) de façon à éloigner une des surfaces d'extrémité opposées d'une des extrémités d'ouverture opposées de l'enveloppe extérieure d'une distance de 50 mm ou plus.

2. Appareil de purification de gaz d'échappement selon la revendication 1, dans lequel le support (2) est réalisé en métal.

3. Appareil de purification de gaz d'échappement selon la revendication 1, dans lequel le support comprend une structure en nid d'abeilles (2).

4. Appareil de purification de gaz d'échappement selon la revendication 1, comprenant en outre un film protecteur (11) présentant une résistance à l'oxydation et formé sur la surface périphérique interne de l'enveloppe extérieure (1) et la surface du support (2).

5. Appareil de purification de gaz d'échappement selon la revendication 4, dans lequel la couche catalytique (12) est appliquée sur le film protecteur (11).

6. Appareil de purification de gaz d'échappement selon la revendication 1, dans lequel l'enveloppe extérieure (1) est un tuyau d'échappement.
